# EUROPEAN PATENT APPLICATION

(11) **EP 2 374 348 A1**
(43) Date of publication of application: **12.10.2011**
(21) Application number: 11154401.1
(22) Date of filing: 14.02.2011
(51) Int. Cl.: A01G 9/18

(54) **Green building**

(30) Priority: 08.04.2010 US 322213 P; 08.07.2010 US 832527
(71) Applicant: GE Investment Co., Ltd., Taipei City 0 (TW)
(72) Inventor: Tsai, Wen-Kuei, Taipei City 0 (TW)
(74) Representative: Karakatsanis, Georgios

(57) **Abstract**

A green building (1) is disclosed. The green building (1) includes at least one plant growing area (10) with plants, at least one lighting device (15) and a heat pump (14). The lighting device (15) radiates light onto the plant growing area (10). The heat pump (14) receives environmental heat.

## Description

### BACKGROUND OF THE INVENTION

### 1. FIELD OF THE INVENTION

The present invention generally relates to a green building, and more particularly to a green construction and method of properly maintaining carbon dioxide/oxygen concentration in a building.

### 2. DESCRIPTION OF RELATED ART

Due to increase in urbanization and industrialization, pollution becomes a big concern to our ecosystem. Carbon dioxide (CO₂) emission is one of the pollutions that, if the concentration is not properly maintained, may cause harm or discomfort to people living or working in a building where people often spend most of their time. The concentration of the carbon dioxide (CO₂) in fresh air is about 0.036-0.039% by volume. Increase in carbon dioxide (CO₂) or equivalently speaking, decrease in oxygen (O₂), may cause increased blood pressure or difficult in breathing.

The oxygen (O₂) may be supplied by photosynthesis in plants that mostly grow outdoors. However, the outdoor air may be even polluted more severely than the indoor air. Further, a tremendous amount of water is required to irrigate the plants as substantial portion of the irrigating water is wastefully evaporated.

For the reason that no effective scheme has been proposed to regulate the carbon dioxide/oxygen concentration in a building, a need has thus arisen to propose a novel construction and method of properly maintaining carbon dioxide/oxygen concentration in an environmentally friendly and energy efficient manner with environmental, economic and health benefits.

### SUMMARY OF THE INVENTION

In view of the foregoing, it is an object of the embodiment of the present invention to provide a green building that is capable of maintaining carbon dioxide/oxygen concentration either in a self-sufficient building or to be linked with another building.

According to one embodiment, a green building includes at least one plant growing area with plants, at least one lighting device and a heat pump. The lighting device radiates light onto the plant growing area. The heat pump receives environmental heat. In one specific embodiment, carbon dioxide required in photosynthesis of the plants is externally supplied from a linked building, and oxygen released from photosynthesis flows in a direction from the green building to the linked building through the gas conduit such that carbon dioxide/oxygen concentrations at both the green building and the linked building may reach equilibrium. In another specific embodiment, the green building is self-sufficient such that carbon dioxide required in photosynthesis of the plants is internally supplied, and oxygen released from photosynthesis flows within the green building.

### BRIEF DESCRIPTION OF THE DRAWINGS

FIG. 1 shows a block diagram of a green building according to one embodiment of the present invention; and
FIG. 2 shows a block diagram of a self-sufficient green building according to another embodiment of the present invention.

### DETAILED DESCRIPTION OF THE INVENTION

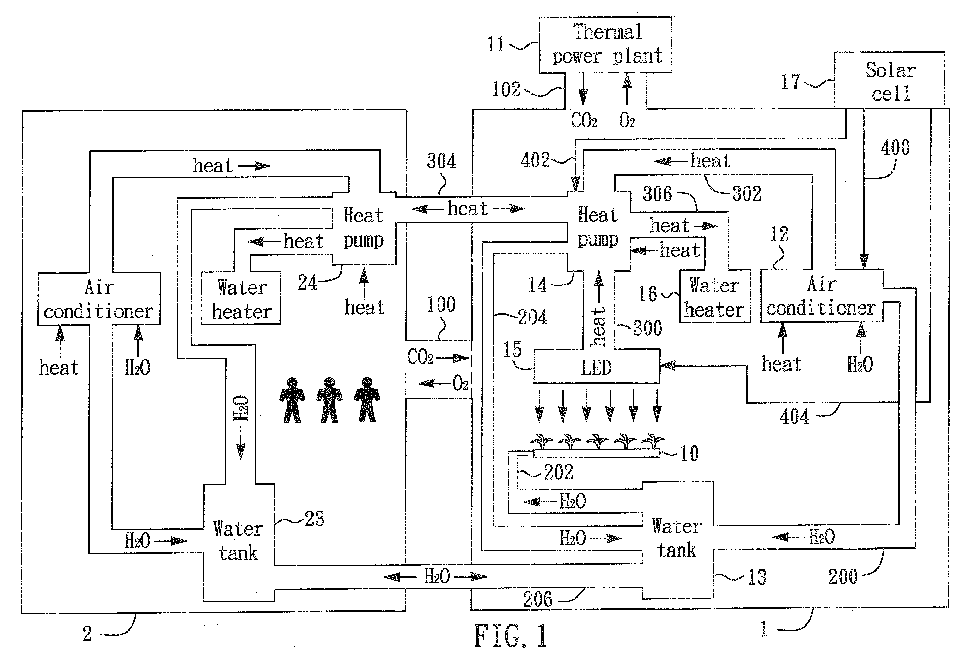

FIG. 1 shows a block diagram of a green building 1 according to one embodiment of the present invention. The green building 1 may be linked to a general-purpose building 2 such as a residential house, an office or an industrial building.

In the embodiment, the green building 1 primarily includes, among others, at least one plant growing area 10 with grown plants such as, but not limited to, C₄ plants that fix carbon dioxide (CO₂) to result in fixation product having four carbon atoms. The carbon dioxide (CO₂) required in photosynthesis may be internally or externally supplied. For example, the required carbon dioxide (CO₂) may come from the linked general-purpose building 2 through a gas conduit 100. In one example, as the general-purpose building 2 is more populated by people than the green building 1, the carbon dioxide (CO₂) released by exhalation in the general-purpose building 1 thus has a concentration higher than that in the green building 1. As a result, the carbon dioxide (CO₂) flows in a direction from the general-purpose building 2 to the green building 1 through the gas conduit 100 such that the concentrations at both sides may reach their equilibrium. On the other hand, the oxygen (O₂) released from the photosynthesis flows in a reverse direction, i.e., from the green building 1 to the general-purpose building 2 through the gas conduit 100. In another embodiment, the flow in the gas conduit 100 may be precisely controlled, for example, by a gas valve. Moreover, carbon dioxide (CO₂) and oxygen (O₂) may be separately transferred and controlled by two conduits respectively.

In another example, the required carbon dioxide (CO₂) may come from a linked thermal power plant 11 through a gas conduit 102. Specifically, the thermal power plant 11 obtains oxygen (O₂) from the green building 1 and emits carbon dioxide (CO₂) to the green building 1 through the gas conduit 102. The flow in the gas conduit 102 may be precisely controlled, for example, by a gas valve.

Water is another element required in the photosynthesis. The water in a water tank 13 may controllably supply the required water in the photosynthesis, through a first water conduit 202, to the plant growing area 10. In the embodiment, the required water may be internally or externally supplied. In one example, an air conditioner 12 is used to extract heat, for example, generated from appliances or people within the green building 1, in order to reduce the temperature in the green building 1, and dehumidify (i.e., extract water) in order to reduce the amount of moisture in the green building 1. The extracted water may then be stored in the water tank 13 through a second water conduit 200.

In another example, a heat pump 14 is used to move (or transfer) heat from one location to another location. For example, the heat pump 14 receives heat generated from a lighting device such as a light emitting device (LED) 15, through a heat conduit 300, while the LED 15 radiates light onto the plant growing area 10. Although the LED 15 is used in the embodiment, it is appreciated by those skilled in the art that other lighting devices such as an organic light emitting device (OLED) may be used instead or together. At the same time, the heat pump 14 generates water that may be further stored in the water tank 13 through a water conduit 204. The heat pump 14 may also receive heat generated from the air conditioner 12 through a heat conduit 302, or receive heat from another heat pump 24 disposed in the general-purpose building 2 through a heat conduit 304. Moreover, the heat pump 14 may receive heat generated from appliances or people within the green building 1. Generally speaking, the heat pump 14, directly or indirectly, receives environmental heat, e.g., the heat directly from the LED 15 or the heat indirectly via the air conditioner 12. In addition, the heat pump 14 may use the received heat to heat the generated water, therefore resulting in heated water. Moreover, the heat pump 14 may transfer the received heat to heat the water in an appliance such as a water heater 16 through a heat conduit 306 for the purpose of cooking or bathing. The heat pump 14 may be integrated with the water heater 16.

In a further example, the water tank 13 may receive water from or transfer water to another water tank 23 disposed in the general-purpose building 2 through a water conduit 206.

In one embodiment, a solar cell 17 may be used to convert the energy of sunlight into electricity, which is then provided to the air conditioner 12, the heat pump 14 and the LED 15 mentioned above through wires 400, 402 and 404 respectively.

According to the embodiment, the oxygen/carbon dioxide concentration of the general-purpose building 2 may be properly maintained. It is appreciated that, in addition to maintaining the oxygen/carbon dioxide concentration, the plants themselves may be traded as merchandise. The water for irrigating the plants and the heat generated from appliances may be recycled within the green building.

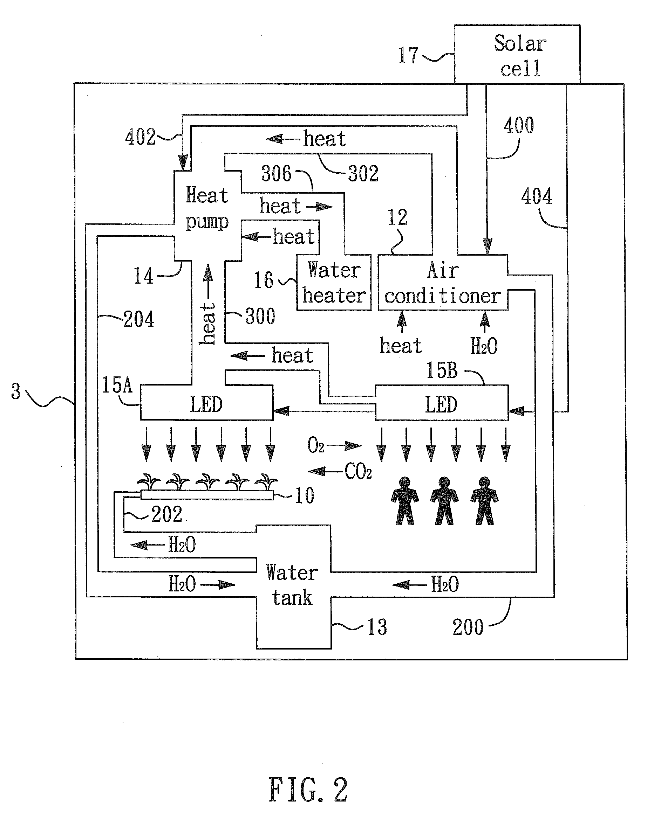

FIG. 2 shows a block diagram of a self-sufficient green building 3 according to another embodiment of the present invention. The self-sufficient green building 3 in this embodiment is similar to the green building 1 as disclosed in the previous embodiment, with the difference that the self-sufficient green building 3 may generally be populated by people. In other words, the self-sufficient green building 3 may be used as both a general-purpose construction and a green construction, without linking to other building. The same elements between FIG. 1 and FIG. 2 use the same numerals, and their functions and connections are thus omitted here for brevity.

In the present embodiment, a portion (e.g., a floor level) of the self-sufficient green building 3 may be dedicated to the general-purpose construction that is populated by people, and another portion (e.g., another floor level) of the self-sufficient green building 3 may be dedicated to the green construction that includes at least one plant growing area 10 with grown plants.

The carbon dioxide (CO₂) required in photosynthesis may, for example, be supplied from what is released by people in the self-sufficient green building 3. On the other hand, the oxygen (O₂) released from the photosynthesis may be supplied to people, thereby forming a supply chain. The water as required in the photosynthesis may be supplied by the air conditioner 12 or/and the heat pump 14, and may be temporarily stored in the water tank 13. It is noted that the heat pump 14 may be used to receive heat generated from the LED 15A that radiates light onto the plant growing area 10 or the LED 15B that illuminates the general-purpose construction. Although the LEDs 15A and 15B are used in the embodiment, it is appreciated by those skilled in the art that other lighting devices such as organic light emitting devices (OLEDs) may be used instead or together. Further, the air conditioner 12 or the heat pump 14 may extract heat generated from people or appliances.

Although specific embodiments have been illustrated and described, it will be appreciated by those skilled in the art that various modifications may be made without departing from the scope of the present invention, which is intended to be limited solely by the appended claims.

## Claims

1. A green building, comprising:
at least one plant growing area with plants;
at least one lighting device radiating light onto the plant growing area; and
a heat pump for receiving environmental heat.

2. The green building of claim 1, wherein the plant is C₄ plant that fixes carbon dioxide to result in fixation product having four carbon atoms.

3. The green building of claim 1, wherein carbon dioxide required in photosynthesis of the plants is internally supplied.

4. The green building of claim 1, wherein carbon dioxide required in photosynthesis of the plants is externally supplied from a linked building through a gas conduit.

5. The green building of claim 4, further comprising a gas valve for controlling carbon dioxide flow in the gas conduit.

6. The green building of claim 4, wherein the linked building is a residential house, an office or an industrial building.

7. The green building of claim 4, wherein oxygen released from photosynthesis of the plants flows within the green building.

8. The green building of claim 4, wherein oxygen released from photosynthesis of the plants flows in a direction from the green building to the linked building through the gas conduit such that carbon dioxide/oxygen concentrations at both the green building and the linked building may reach equilibrium.

9. The green building of claim 8, further comprising a gas valve for controlling oxygen flow in the gas conduit.

10. The green building of claim 8, wherein the gas conduit comprises two conduits for respectively transferring carbon dioxide and oxygen.

11. The green building of claim 1, wherein carbon dioxide required in photosynthesis of the plants is externally supplied from a linked thermal power plant through a gas conduit, and oxygen released from photosynthesis of the plants is provided to the linked thermal power plant through the gas conduit.

12. The green building of claim 1, wherein the lighting device is a light emitting diode (LED) or an organic light emitting diode (OLED).

13. The green building of claim 1, further comprising a water tank for storing water and supplying the stored water to the plants through a first water conduit.

14. The green building of claim 13, further comprising an air conditioner, wherein extracted water of the air conditioner is stored in the water tank through a second water conduit.

15. The green building of claim 1, wherein the heat pump further generates water, and the generated water is heated by the received heat, thereby resulting in heated water.

16. The green building of claim 15, further comprising a water heater that receives heat transferred from the heat pump through a heat conduit.

17. The green building of claim 16, wherein the heat pump is integrated with the water heater.

18. The green building of claim 1, further comprising a solar cell for converting energy of sunlight into electricity that is provided to at least one appliance in the green building.
